# EUROPEAN PATENT APPLICATION

(11) **EP 1 376 845 A1**
(43) Date of publication of application: **02.01.2004**
(21) Application number: 03076948.3
(22) Date of filing: 24.06.2003
(51) Int. Cl.: H02M 7/217

(54) **Method and apparatus for controlling the power supplied to a load**

(30) Priority: 28.06.2002 EP 02078187
(71) Applicant: Océ-Technologies B.V., 5914 CC Venlo (NL)
(72) Inventor: Nillesen, Martijn E., 5941 GX Velden (NL)
(74) Representative: Van de Sande, J.H.A.W.

(57) **Abstract**

An apparatus for controlling the power supplied from an AC power supply to an ohmic load comprises a switch for connecting the load to the AC power supply, a controller for providing a control signal to the switch, and a rectifier bridge having an input and an output. The input is adapted for connection to the AC power supply and the output is connected to a series connection of a first inductor, the load and the switch. The controller provides a control signal with a frequency which is at least 500 times higher than the frequency of the AC power supply. The switch is switched on and off by said control signal. The controller comprises a control element for varying the duty cycle of the control signal.

## Description

The invention relates to a method for controlling the power supplied from an AC power supply to an ohmic load, the AC power supply providing a sinusoidal output, the method comprising connecting the load to the AC power supply during a part of each period of the sinusoidal output, wherein the power supplied from the AC power supply to the load is varied by varying the duration of said part of each period. The invention further relates an apparatus for controlling the power supplied from an AC power supply to an ohmic load, comprising a switch for connecting the load to the AC power supply, and a controller for providing a control signal to the switch.

US-A-6 114 669 discloses a method and apparatus of this type, wherein the controller operates according to a so-called phasecut control method. Within each half period of the AC voltage the switch is closed for connecting the load to AC power supply and at a zero-cross of the AC voltage the switch opens again. In this known apparatus flicker and interference radiation are reduced by varying the phase angle of the control signal around a phase angle corresponding to the power to be provided. Although the known apparatus allows the load to be gradually connected to the AC power supply, a phasecut control method shows the disadvantage that the control steps are relatively large, whereas phase cutting is inaccurate at small phase angles in particular. Moreover, a phasecut control method causes harmonic distortion resulting in a relatively low value of the power factor.

The invention aims to provide a method and apparatus of the above-mentioned type meeting high requirements regarding harmonic distortion and flicker.

According to the invention the method is characterized in that the sinusoidal output is rectified and the rectified output is delivered to a series connection of a first inductor and the load, wherein the load is connected to and disconnected from the AC power supply at a frequency which is at least 500 times higher than the frequency of the AC power supply, wherein the power supplied from the AC power supply to the load is varied by varying the time ratio of connecting/disconnecting the load.

The apparatus of the invention is characterized by a rectifier bridge having an input and an output, the input being adapted for connection to the AC power supply and the output being connected to a series connection of a first inductor, the load and the switch, wherein the controller provides a control signal with a frequency which is at least 500 times higher than the frequency of the AC power supply, wherein the switch is switched on and off by said control signal, wherein the controller comprises a control element for varying the duty cycle of the control signal.

In this manner a method and apparatus are obtained, wherein the high-frequency distortion caused by the high-frequency switching of the switch can be suppressed in an effective manner by using the ohmic character of the load in advantageous manner in a suppressing circuit with the inductor. The significant reduction of harmonic distortion results in a power factor which approximates the desired value 1. Further, the high-frequency switching allows a linear control of the time ratio of connecting/disconnecting the load over the complete range 0-100%. The control steps can be very small. The apparatus can be designed for a range of output voltages and frequencies of the AC power supply.

The method and apparatus according to the invention can be used in various applications such as in heat control equipment, light dimmers, and the like.

The invention will be further explained by reference to the drawings in which an embodiment of the apparatus of the invention is schematically shown.

Fig. 1 shows a schematical circuit diagram of an embodiment of the apparatus of the invention.

Figs. 2-5 show the current flow in the circuit diagram of Fig. 1 for four different cases during one period of the AC voltage of the AC power supply.

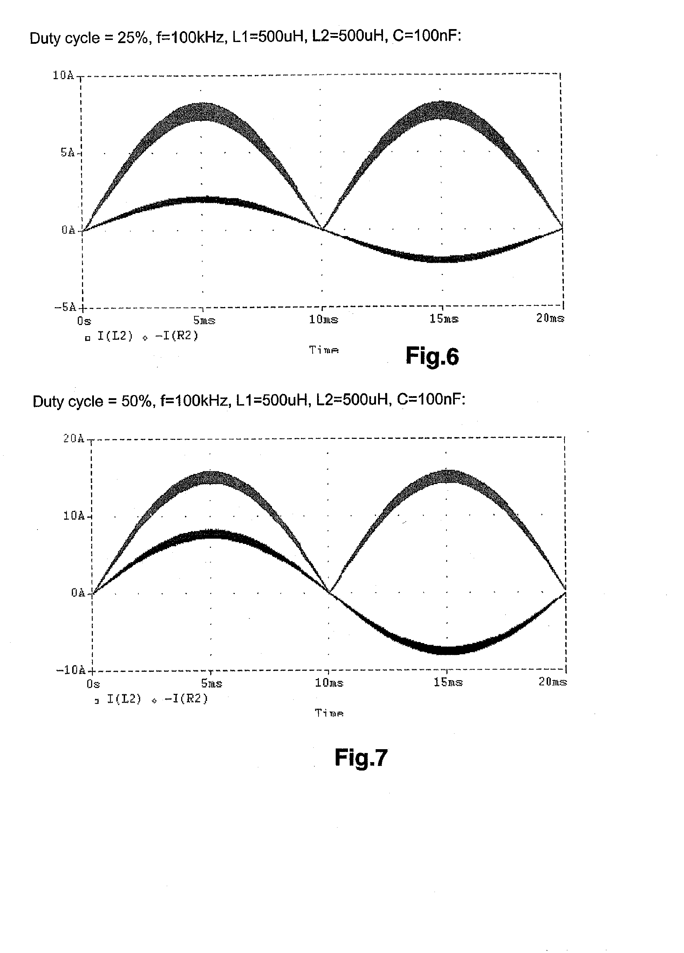

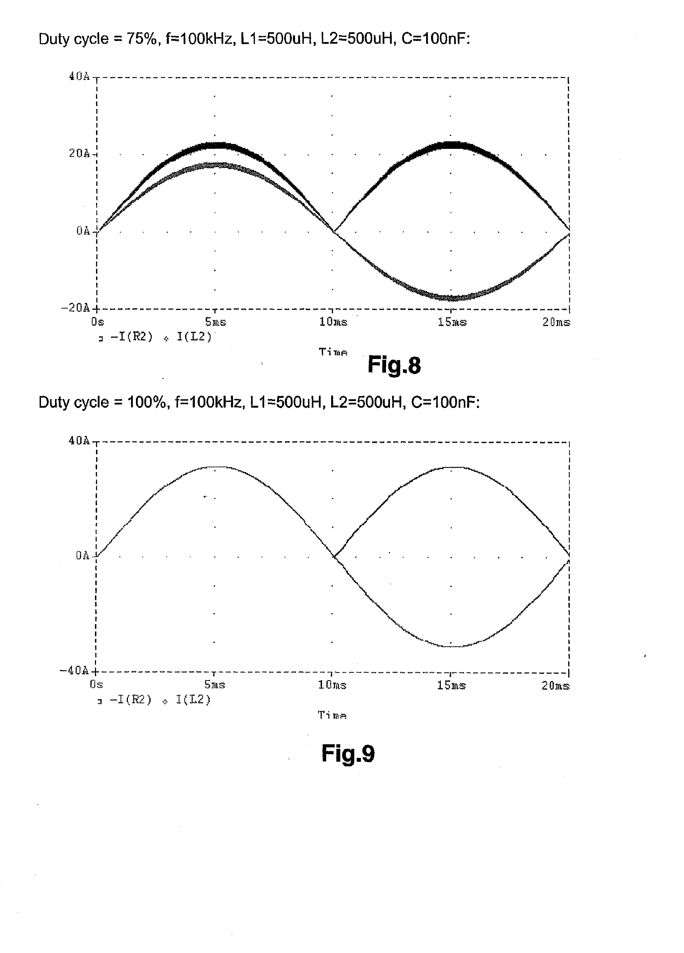

Figs. 6-9 show diagrams of the AC current of the power supply and the current of the load, respectively, for different duty cycles of the control signal.

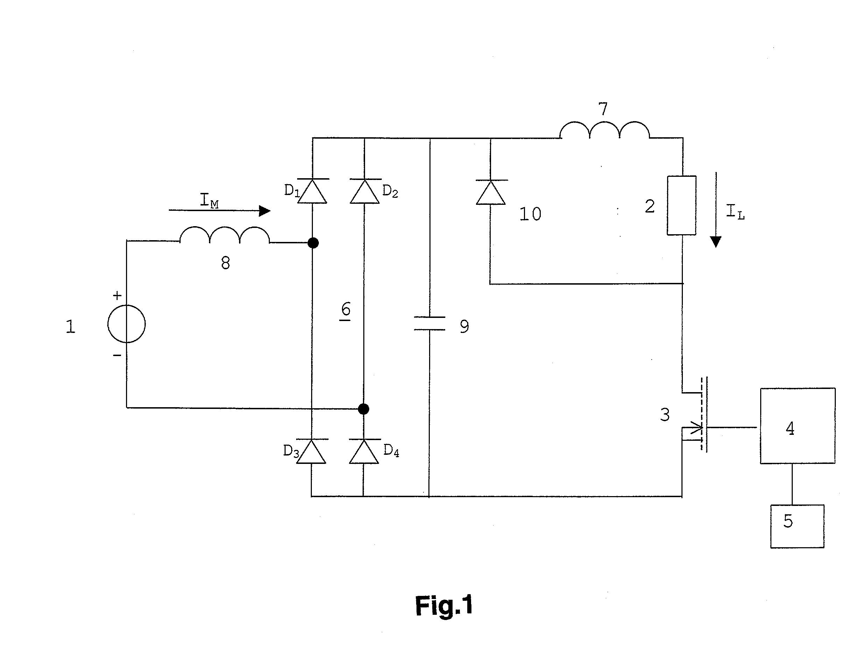

Referring to Fig. 1 there is shown a circuit diagram of an embodiment of an apparatus for controlling the power supplied from an AC power supply 1 to an ohmic load 2. The AC power supply 1 provides a sinusoidal output voltage and current. The apparatus comprises a switch 3 for connecting the load 2 to the power supply 1. In the embodiment shown a FET, more particularly a MOSFET, is used as the switch 3. However it will be understood that any other suitable type of switch can be used, for example an IGBT, a transistor, etc.

A controller 4 provides a control signal to the switch 3 for switching the switch 3 on and off. The control signal has a fixed frequency and a variable duty cycle. The frequency of the control signal is preferably at least 500 times higher than the frequency of the AC power supply 1. With a standard frequency of the power supply 1 of 50 Hz the frequency of the control signal is at least 25 kHz. Preferably, the frequency of the control signal is in the range of 50-250 kHz. In this manner the load 2 is connected to and disconnected from the AC power supply 1 a number of times within each period of the AC output voltage.

The controller 4 comprises a control element 5 for varying the duty cycle of the control signal. The duty cycle can be varied from 0 up to 100% thereby varying the power supplied from the power supply 1 to the load 2 from 0 to 100%. The control element 5 can be a manually adjustable element or any other suitable element. As an alternative the control element can be part of an electronic controlling circuit which controls the duty cycle in dependence on one or more input signals received from sensors.

In the embodiment of Fig. 1 the apparatus comprises a rectifier bridge 6 having an output connected to a series connection of a first inductor 7, the ohmic load 2 and the switch 3. The input of the rectifier bridge 6 is connected to the AC power supply 1 through a second inductor 8. A freewheeling element made as a capacitor 9 is connected to the output of the rectifier bridge 6 parallel to the series connection of inductor 7, load 2 and switch 3. As an alternative the capacitor 9 could also be connected to the input of the rectifier bridge 6. Preferably the capacitor 9 is connected to the output of the rectifier bridge as shown in Fig. 1 as in this manner high-frequency paths in the circuit can be reduced thereby reducing EMC radiation. Moreover when the switch 3 is switched off, no unnecessary capacitive current will flow.

A further freewheeling element 10 is connected parallel to the series connection of the first inductor 7 and the load 2. In the embodiment shown the freewheeling element 10 is a diode of the very fast recovery type.

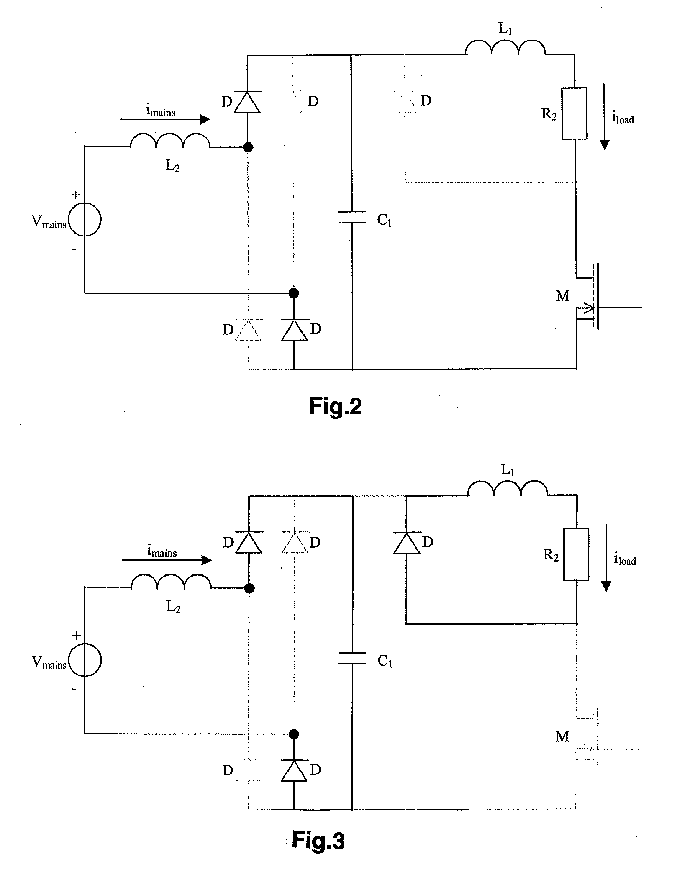

In operation the ohmic load 2 receives a rectified sinusoidal voltage having an amplitude which is controlled by the duty cycle of the switch 3. In the phase shown in Fig. 2, wherein voltage V1 of the power supply 1 is positive and the switch 3 is closed, the current IL through the load 2 will increase until the switch 3 is switched off. In the next phase, wherein the voltage V1 is still positive and the switch 3 is open, the load current IL will be reduced. In this phase the load 2 will dissipate the energy stored in inductor 7 in the circuit closed through the freewheeling element 10. During this phase the capacitor 9 operates as a freewheeling element for the inductor 8.

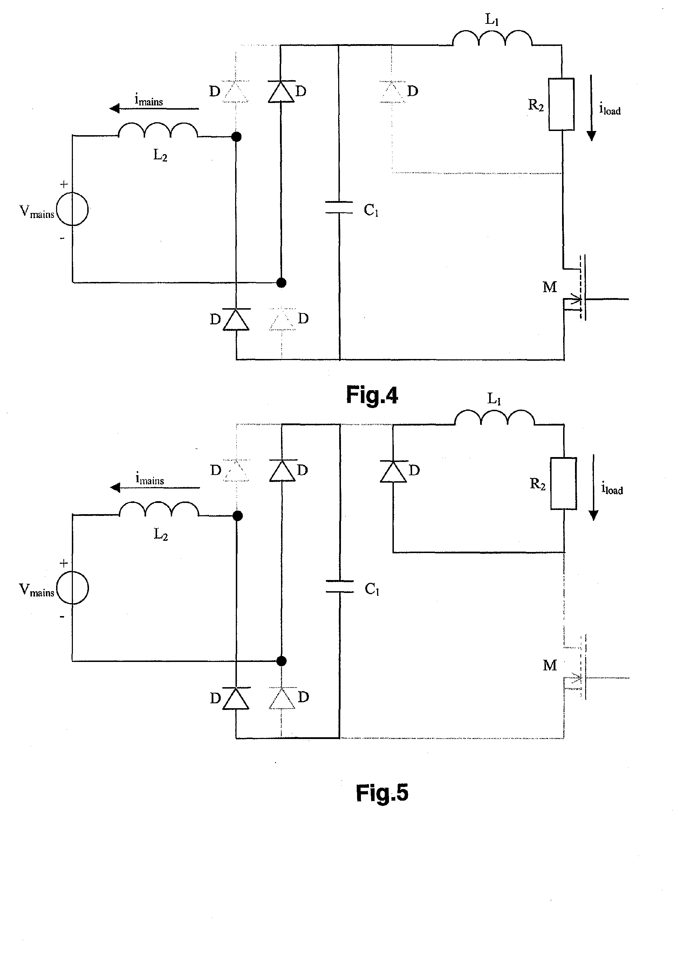

The third and fourth phases shown in Figs. 4 and 5 correspond to the phases of Fig. 2 and 3, wherein however the voltage V1 of the power supply 1 is negative so that AC current of the power supply will flow in reversed direction through the other two diodes of the rectifier bridge 6.

In the circuit of the apparatus described, the ohmic character of the load 2 is advantageously used in suppressing the harmonic distortions caused by the high frequency switching. As the harmonic distortion components are located at relatively high frequencies, they can be effectively suppressed by the suppressing circuit formed by the load 2 and the inductor 7.

It is noted that the rectifier bridge 6 can be a standard bridge. The freewheeling element 10 has to be of a very fast recovery type in order to obtain a high efficiency. As indicate above, the frequency of the control signal is preferably in the range of 50-250 kHz. The impedance value of the inductors 7 and 8 is preferably in the range of 50-500 µH and the impedance of the capacitor 9 is preferably in the range of 100 nF up to 2.2 µF. Good results have been obtained in experiments with an embodiment according to the circuit diagram as shown in Fig. 1 with a switching frequency of 100 kHz, an impedance value of 500 µH for the first inductor 7, an impedance of 500 µH for the second inductor 8 and an impedance of 100 nF for capacitor 9. The resistance value of the load 2 was 10 Ω.

It will be understood that the invention is not restricted to embodiments with components having such values and that the embodiment shown can be varied in a number of ways within the scope of the following claims.

## Claims

1. Method for controlling the power supplied from an AC power supply to an ohmic load, the AC power supply providing a sinusoidal output, the method comprising connecting the load to the AC power supply during a part of each period of the sinusoidal output, wherein the power supplied from the AC power supply to the load is varied by varying the duration of said part of each period, **characterized in that** the sinusoidal output is rectified and the rectified output is delivered to a series connection of a first inductor and the load, wherein the load is connected to and disconnected from the AC power supply at a frequency which is at least 500 times higher than the frequency of the AC power supply, wherein the power supplied from the AC power supply to the load is varied by varying the time ratio of connecting/disconnecting the load.

2. Apparatus for controlling the power supplied from an AC power supply to an ohmic load, comprising a switch for connecting the load to the AC power supply, a controller for providing a control signal to the switch, **characterized by** a rectifier bridge having an input and an output, the input being adapted for connection to the AC power supply and the output being connected to a series connection of a first inductor, the load and the switch, wherein the controller provides a control signal with a frequency which is at least 500 times higher than the frequency of the AC power supply, wherein the switch is switched on and off by said control signal, wherein the controller comprises a control element for varying the duty cycle of the control signal.

3. Apparatus according to claim 2, wherein a freewheeling element is connected parallel to the series connection of the first inductor and the load.

4. Apparatus according to claim 2 or 3, wherein a second inductor is series connected to the input of the rectifier bridge.

5. Apparatus according to any one of the preceding claims, wherein a freewheeling element is connected parallel to the rectifier bridge, preferably to the output of the bridge.

6. Apparatus according to any one of the preceding claims, wherein the frequency of the control signal is in the range of 50 up to 250 kHz.
